# EUROPÄISCHE PATENTSCHRIFT

(11) **EP 0 498 175 B1**
(45) Veröffentlichungstag und Bekanntmachung des Hinweises auf die Patenterteilung: **10.05.1995**
(21) Anmeldenummer: 92100575.7
(22) Anmeldetag: 15.01.1992
(51) Int. Cl.: H02G 3/08

(54) **Möbel-Einbaubox**
Built-in furniture box
Boîte à encastrer dans des meubles

(30) Priorität: 08.02.1991 DE 4103852
(43) Veröffentlichungstag der Anmeldung: 12.08.1992
(73) Patentinhaber: A. & H. Meyer GmbH Leuchten und Büroelektrik, 32694 Dörentrup (DE)
(72) Erfinder: Meyer, Horst, W-4926 Dörentrup (DE)
(74) Vertreter: Hanewinkel, Lorenz, Dipl.-Phys.

(56) Entgegenhaltungen:
- DE-A- 1 690 256
- FR-A- 2 254 133
- US-A- 4 082 915
- US-A- 4 288 655
- US-A- 4 304 958
- US-A- 4 591 658
- US-A- 4 605 816

## Beschreibung

Die Erfindung bezieht sich auf eine Möbel-Einbaubox in Form einer Hohlwanddose, in der mindestens eine Steckdose und/oder ein Schalter und/oder ein Kommunikationseinsatz angeordnet und an der ein sichtseitiger Abdeckrahmen lösbar angebracht ist. Eine Einbaubox dieser Art ist aus der Patentschrift US-A-4 304 958 bekannt.

Eine weitere derartige, in der Praxis bekannte Einbaubox weist eine einstückige, topfförmige Einbaudose auf, die in ein dem Dosendurchmesser entsprechendes Loch in einer Möbelwand eingesetzt wird.

Die Kabel müssen durch den Boden der Einbaudose hindurch aus der Dose herausgezogen werden und dann werden diese außerhalb der Dose mit dem Steckdosen- oder Schaltereinsatz verdrahtet, was schwierig ist, da der Steckdosen- oder Schaltereinsatz von Hand festgehalten und die aus der Dose heraushängenden Kabel angeschlossen werden müssen.

Danach wird der Steckdosen- oder Schaltereinsatz in die Dose eingesteckt, an der Möbelwandung durch Schrauben befestigt und anschließend der Abdeckrahmen aufgerastet.

Diese Einbauweise ist umständlich, bereitet Schwierigkeiten durch die Montage direkt an der Möbelwand und gewährleistet keine stabile Verbindung von Dose und Einsatz.

Aufgabe der Erfindung ist es, eine nach der eingangs genannten Art aufgebaute Möbel-Einbaubox in Form einer Hohlwanddose in der elektrischen Installationsverdrahtung wesentlich zu vereinfachen, in der Festlegung der Einsätze in der Dose zu verbessern und in der Befestigung der Box in der Möbelwand zu erleichtern.

Diese Aufgabe wird erfindungsgemäß dadurch gelöst, daß diesselbe zweiteilig aus einem rahmenartigen Oberteil und einem mit dem Oberteil lagefixiert verbindbaren, kastenartige Boden gebildet ist und im Oberteil und im Boden mindestens ein Kabeldurchlaßteil ausgespart und/oder eingesetzt ist und dabei die Kabeldurchlaßteile im Stoßbereich von Oberteil und Boden einen zugentlasteten Kabeldurchlaß ergeben.

Die sich an den Patentanspruch 1 anschließenden Unteransprüche beinhalten Gestaltungsmerkmale, die vorteilhafte und förderliche Weiterbildungen der Aufgabenlösung darstellen.

Die erfindungsgemäße Hohlwanddose ermöglicht aufgrund ihrer Konstruktion eine äußerst einfache elektrische Installationsverdrahtung, ein sicheres Festlegen eines oder mehrerer Einsätze und eine leichte Befestigung in einer Möbelwand.

Aufgrund ihrer zweiteiligen Ausbildung (Oberteil und Boden) stellt diese einkompaktes, vormontiertes und elektrisch verdrahtetes Bauelement dar, in dem in das rahmenartige Oberteil der oder die Steckdosen, Schalter, Kommunikationseinsätze durch Schrauben festgelegt, anschließend die elektrische Installation vorgenommen und dann der Boden am Oberteil durch Schrauben und/oder Clipse befestigt wird, wobei die aus der Dose herausgeführten elektrischen Kabel gleichzeitig eine Zugentlastung erhalten; dann wird diese vormontierte Einheit in die Möbelwand eingebaut, indem die Kabel in die Wandöffnung hineingesteckt und dann die gesamte Dose in diese Öffnung eingesetzt und mit dem umlaufenden Befestigungsrand des Oberteiles an der Möbelwand anliegend durch Schrauben an der Möbelwand festgelegt und zum Schluß der Abdeckrahmen an den Einsätzen angeclipst wird.

Diese zweiteilige Hohlwanddose ist einfach und kostengünstig aus Kunststoff herstellbar und in verschiedenen Größen und Grundformen ausführbar.

Durch den Einsatz eines drehbar zwischen Oberteil und Boden gelagerten, zweiteiligen Klemmbackenkörper können die darin durch die die beiden Klemmbacken zusammenhaltenden Schrauben zugentlastend geführten elektrischen Kabel in einem beliebigen Winkel aus der Einbaubox herausgeführt werden, was insbesondere beim Einbau der Box in Möbel eine einfachere Handhabung ergibt, in dem die Kabel beliebig gegenüber der Box bewegt und verlegt werden können.

Auf den Zeichnungen ist ein Ausführungsbeispiel der Erfindung in Varianten dargestellt, welches nachfolgend näher erläutert wird. Es zeigt:
- Fig. 1: einen Längsschnitt durch eine in eine Möbelwandung eingebaute, zweiteilige Hohlwanddose,
- Fig. 2: eine Stirnansicht der Hohlwanddose,
- Fig. 3: einen Längsschnitt durch das Oberteil mit Kabeldurchlaßteilen der Hohlwanddose,
- Fig. 4: eine Stirnansicht des Oberteiles,
- Fig. 5: einen Längsschnitt durch den Boden mit Kabeldurchlaßteilen der Hohlwanddose,
- Fig. 6: eine Stirnansicht des Bodens,
- Fig. 7: eine Draufsicht auf einen Teil des Oberteiles mit eingesetzten Steckdosen und Abdeckrahmen,
- Fig. 8: eine Draufsicht auf den Boden,
- Fig. 9: einen senkrechten Schnitt durch das Oberteil und den Boden im Bereich eines Kabeldurchlasses mit Zugentlastung,
- Fig. 10: eine Draufsicht auf einen Längenendbereich eines halben Oberteiles und Bodens mit in Achslagerungen drehbar eingesetzten Klemmbackenkörper,
- Fig. 11: einen Querschnitt durch den im Stoßbereich von Oberteil und Boden eingesetzten Klemmbackenkörper,
- Fig. 12: eine perspektivische Darstellung des Klemmbackenkörpers.

Die Möbel-Einbaubox in Form einer Hohlwanddose dient zur Aufnahme mindestens einer Steckdose (1) und/oder eines Schalters und/oder eines Kommunikationseinsatzes und an ihr ist ein sichtseitiger Abdeckrahmen (2) lösbar angebracht.

Diese Hohlraumdose ist zweiteilig aus einem rahmenartigen Oberteil (3) mit mindestens einem in einer Rahmenwandung (5) ausgesparten Kabeldurchlaßteil (6a) und einem mit dem Oberteil (3) lagefixiert verbindbaren, kastenartigen Boden (4) mit mindestens einem ausgesparten Kabeldurchlaßteil (6b) gebildet; die beiden Kabeldurchlaßteile (6a, 6b) ergeben im Stoßbereich von Oberteil (3) und Boden (4) zusammen einen zugentlasteten Kabeldurchlaß (6).

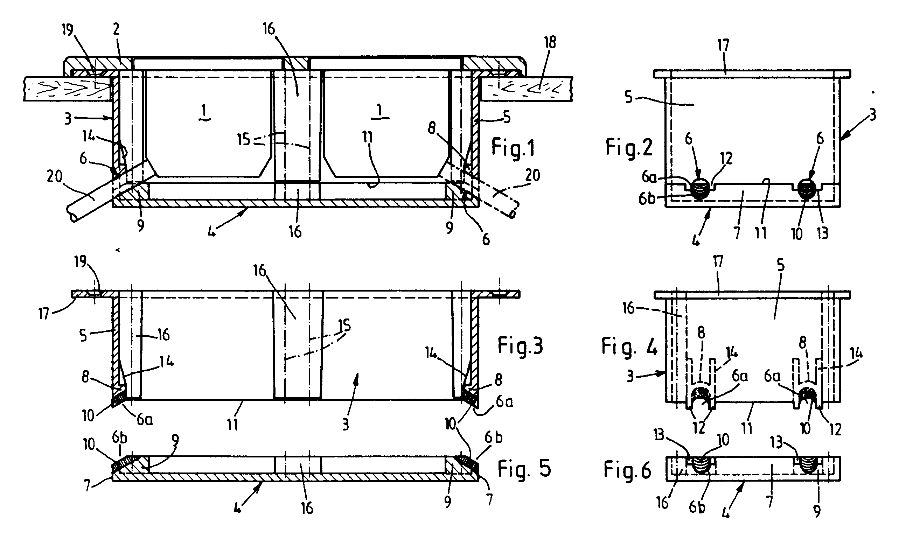

Jeder Kabeldurchlaß (6) gemäß dem zeichnerisch dargestellten Ausführungsbeispiel nach Fig. 1 erstreckt sich auf einem Winkel von 45 Grad, also diagonal zwischen Rahmenwandung (5) und Bodenwandung (7).

Es liegt jedoch im Rahmen der Erfindung, den Verlauf der Kabeldurchlässe (6) auch so zu gestalten, daß der Kabeldurchlaß (6) in jeder beliebigen Winkelgradeinteilung aus der Hohlwanddose austreten kann.

Jedes Kabeldurchlaßteil (6a, 6b) ist von einer halbkreisförmigen Aussparung gebildet und die zusammengehörenden Kabeldurchlaßteile (6a, 6b) von Oberteil (3) und Boden (4) bilden einen im Querschnitt kreisförmigen und/oder elliptischen Kabelkanal (6).

An zwei sich gegenüberliegenden Seiten (Wandungen) (5, 7) des Oberteiles (3) und des Bodens (4) sind jeweils mindestens eine, vorzugsweise zwei oder mehr im Abstand nebeneinander angeordnete Kabeldurchlaßteile (6a, 6b) ausgespart, so daß die Hohlraumdose an zwei sich gegenüberliegenden Seiten (5, 7) einen oder zwei Kabeldurchlässe (6) zeigt.

Das Oberteil (3) und der Boden (4) haben je eine rechteckige Grundform und in den kürzeren Rechteckseiten (5, 7) ist das Kabeldurchlaßteil (6a, 6b) bzw. sind die Kabeldurchlaßteile (6a, 6b) ausgespart.

Jedes Kabeldurchlaßteil (6a, 6b) im Oberteil (3) und Boden (4) wird durch einen am Oberteil (3) und Boden (4) angeformten, keilförmigen und zum Oberteil- und Boden-Innenraum sich erstreckenden Bock (8, 9) zu einer schrägen Kabelrinne verlängert und in jeder Kabelrinne sind Riffelungen (10) od. dgl. zur Kabel-Festklemmung und - Zugentlastungssicherung eingeformt.

Die Kabeldurchlässe (6) verlaufen vom Innenraum des Oberteiles (3) aus schräg nach außen und zur Außenseite des Bodens (4).

Der Kastenrand (7) des Bodens (4) stößt mit dem Rand (11) des Oberteiles (3) zusammen, die schrägen Böcke (8, 9) und/oder Stifte und Löcher auf den Längsrändern fixieren den Boden (4) gegenüber dem Oberteil (3) in Längsrichtung und das Oberteil (3) weist im Bereich der Kabeldurchlaßteile (6a) über den Rand (11) vorstehende Lappen (12) auf, die in im Kastenrand (7) des Bodens (4) im Bereich der Kabeldurchlaßteile (6b) ausgenommene Vertiefungen (13) formschlüssig eingesetzt sind.

Die Lappen (12) werden beiderseits des Kabeldurchlaßteiles (6a) durch an die Innenseite der Rahmenwand (5) angeformte Rippen (14) ausgesteift.

Der Boden (4) ist am Oberteil (3) durch Schrauben (15) oder Clipse lösbar gehalten, die durch und in am Boden (4) und Oberteil (3) angeformte Schraubaufnahmen (16) fassen.

Das Oberteil (3) zeigt an seinem den Kabeldurchlaßteilen (6a) gegenüberliegenden Rand einen angeformten, umlaufenden und nach außen gerichteten Befestigungsrand (17) für die Hohldosenfestlegung an einer Wandung (18) mittels Schrauben, die durch im Rand (17) ausgeformte Löcher (19) greifen.

Das Oberteil (3) und der Boden (4) bestehen jeweils einteilig aus Kunststoff.

Die Steckdosen (1), Stecker, Kommunikationseinsätze liegen mit Befestigungsansätzen (1a) auf den Schraubaufnahmen (16) des Oberteiles (3) auf und werden dort durch Schrauben festgelegt.

Der Abdeckrahmen (2) wird durch hakenartige Rastnasen an der oder den Steckdosen (1) od. dgl. verrastet und liegt bündig auf den Befestigungslaschen (17) auf und umschließt diese Befestigungslaschen (17), wie in Fig. 1 ersichtlich.

Aus Fig. 3, 4, 7, 8 und 9 sind die in den angeformten schrägen Böcken (8, 9) ausgeformten, rinnenförmigen Kabeldurchlaßteile (6a, 6b) mit den Riffelungen (10) ersichtlich, wobei die Kabeldurchlaßteile (6a) am unteren Rand (11) schräg nach außen und unten verlaufen und die Kabeldurchlaßteile (6b) im Boden (4) vom oberen Kastenrand schräg nach unten und außen zur äußeren ebenen Bodenseite sich erstrecken, so daß die Kabeldurchlaßteile (6a, 6b) die schräg nach unten und außen gerichteten Kabelkanäle (6) ergeben (Fig. 1).

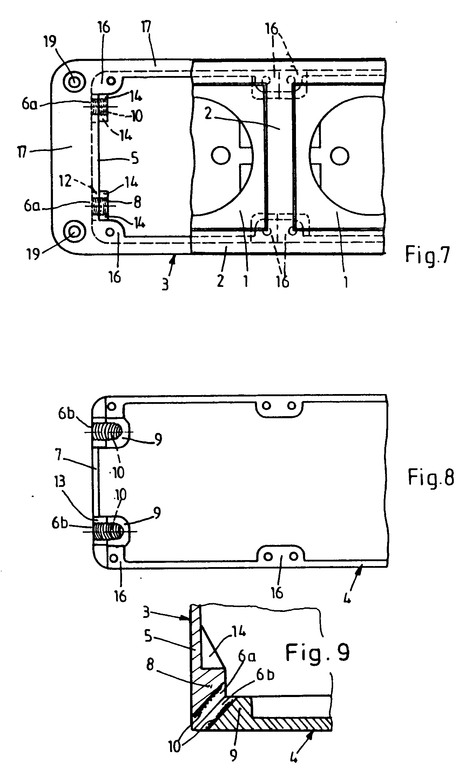

Beim Verbinden von Oberteil (3) mit Boden (4) durch die Schrauben (15) werden die keilförmigen Böcke (8, 9) mit ihren Keilflächen zusammengezogen, so daß einerseits die elektrischen Kabel (20) in den Kabelkanälen (6) festgeklemmt und durch die Riffelungen (10) gegen Zug entlastet sind und andererseits die Keilflächen den Boden (4) gegenüber dem Oberteil (3) in Längsrichtung lagefixieren (Fig. 9).

Aus Fig. 2 sind die geschlossenen Kabeldurchlässe (6) ersichtlich und dabei wird auch gezeigt, wie die Lappen (12) des Oberteiles (3) in die Vertiefungen (13) des Bodens (4) einfassen und den Boden (4) in Querrichtung zum Oberteil (3) lagefixieren.

Die Lappen (12) schließen außen bündig mit der Oberteilwand (5) ab und lassen sich von schräg oder parallel zur Wandung (5) verlaufenden, nach unten über den Rand (11) vorstehenden Wandteilen bilden, die den halben Kabeldurchlaß (6a) jeweils umgeben und in eine entsprechend ausgebildete Vertiefung (13) beiderseits des Kabeldurchlaßteiles (6b) an der Außenseite des Kastenrandes (7) eingesteckt werden, so daß Oberteil (3) und Boden (4) außen eine geschlossene und bündige Einheit bilden, in deren Stoß die Kabelkanäle (6) austreten.

Fig. 3, 5 und 9 zeigt die innenseitig beiderseits jeder Kabeldurchlaßrinne (6a) in Höhenrichtung an das Oberteil (3) angeformten Rippen (14).

Die Hohlraumdose läßt sich für die Aufnahme nur einer Steckdose, eines Schalters oder eines Kommunikationseinsatzes ausführen, oder ist als langgestreckte Dose für die Aufnahme zweier oder mehrerer der vorgenannten Bauteile in gleicher oder kombinierter Anordnung ausgebildet.

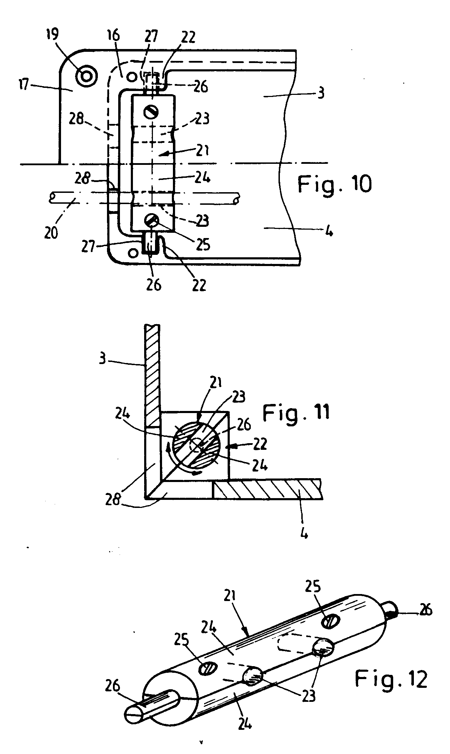

Bei der abgeänderten Ausführung der Möbel-Einbaubox gem. Fig. 10 bis 12 ist in dieselbe ein Kabeldurchlaßteil (21) eingesetzt, welches von einem in sich an die Schraubaufnahmen (16) anschließenden Achslagerungen (22) des Oberteiles (3) und Bodens (4) drehbar gelagerten, zweigeteilten Klemmbackenkörper mit mindestens einem Kabeldurchgang (23) und mindestens zwei die beiden Klemmbacken (24) zusammenhaltenden und mit den Klemmbacken (24) eine Kabelzugentlastung ergebenden Schrauben (25) gebildet ist.

Die Achslagerungen (22) sind jeweils von zwei an dem Oberteil (3) und Boden (4) angeformten im Diagonalstoß zusammenliegenden Böcken gebildet.

Der Klemmbackenkörper ist zylindrisch und im Querschnitt kreisförmig ausgeführt und seine beiden Klemmbacken (24) sind von Halbzylindern und stirnendseitigen, halbzylindrischen Lagerstiften, welche zusammen eine zylindrische Lager- und Drehachse (26) ergeben, gebildet. Die beiden Klemmbacken (24) haben im Trennbereich eine oder mehrere ausgesparte Rinnen, die zusammen je einen Kabeldurchgang (23) bilden. Zwei oder mehrere quer zu den Kabeldurchgängen (23) gerichtete Schrauben (25) halten die beiden Klemmbacken (24) zusammen und klemmen die Kabel (20) zwischen den Backen (24) zugentlastend fest.

Die beiden Klemmbacken (24) sind mit ihren beiden Lager- und Drehachsen (26) in rinnenförmigen Aussparungen (27) der Achslagerungen (22) von Oberteil (3) und Boden (4) quer zur Boxenlängsrichtung stufenlos axial verdrehbar gelagert.

Im Oberteil (3) und Boden (4) ist eine einen großen Drehwinkel für die Klemmbacken (24) zum in beliebigen Winkelgradeinteilungen aus der Box austretenden Kabelverlauf ermöglichende Aussparung (28) vorgesehen.

Für gleiche Bauteile bei dieser abgeänderten Boxausführung sind dieselben Bezugszahlen wie bei der Box nach Fig. 1 bis 9 verwendet worden.

## Patentansprüche

1. Möbel-Einbaubox in Form einer Hohlwanddose, in der mindestens eine Steckdose und/oder ein Schalter und/oder ein Kommunikationseinsatz angeordnet und an der ein sichtseitiger Abdeckrahmen lösbar angebracht ist, dadurch gekennzeichnet, daß dieselbe zweiteilig aus einem rahmenartigen Oberteil (3) und einem mit dem Oberteil (3) lagefixiert verbindbaren, kastenartigen Boden (4) gebildet ist und im Oberteil (3) und im Boden (5) mindestens ein Kabeldurchlaßteil (6a,6b/21) ausgespart und/oder eingesetzt ist und dabei die Kabeldurchlaßteile (6a,6b/21) im Stoßbereich von Oberteil (3) und Boden (4) einen zugentlasteten Kabeldurchlaß (6) ergeben.

2. Möbel-Einbaubox nach Anspruch 1, dadurch gekennzeichnet, daß jedes Kabeldurchlaßteil (6a, 6b) von einer halbkreisförmigen Aussparung gebildet ist und die zusammengehörenden Kabeldurchlaßteile (6a, 6b) von Oberteil (3) und Boden (4) einen im Querschnitt kreisförmigen und/oder elliptischen Kabelkanal (6) ergeben.

3. Möbel-Einbaubox nach Anspruch 1 und 2, dadurch gekennzeichnet, daß an zwei sich gegenüberliegenden Seiten (Wandungen) (5, 7) des Oberteiles (3) und des Bodens (4) jeweils mindestens eine, vorzugsweise zwei oder mehr im Abstand nebeneinander angeordnete Kabeldurchlaßteile (6a, 6b) ausgespart sind.

4. Möbel-Einbaubox nach einem der Ansprüche 1 bis 3, dadurch gekennzeichnet, daß das Oberteil (3) und der Boden (4) je eine rechteckige Grundform haben und in den kürzeren Rechteckseiten das Kabeldurchlaßteil (6a, 6b) bzw. die Kabeldurchlaßteile (6a, 6b) ausgespart sind.

5. Möbel-Einbaubox nach einem der Ansprüche 1 bis 4, dadurch gekennzeichnet, daß jedes Kabeldurchlaßteil (6a, 6b) im Oberteil (3) und Boden (4) durch einen am Oberteil (3) und Boden (4) angeformten, keilförmigen und zum Oberteil- und Boden-Innenraum sich erstreckenden Bock (8, 9) zu einer schrägen Kabelkanalrinne verlängert ist und in der Kabelkanalrinne Riffelungen (10) od dgl. zur Kabel-Festklemmung und -Zugentlastungssicherung eingeformt sind.

6. Möbel-Einbaubox nach einem der Ansprüche 1 bis 5, dadurch gekennzeichnet, daß die Kabeldurchlässe (6a, 6b) vom Innenraum des Oberteiles (3) aus schräg nach außen und zur Außenseite des Bodens (4) verlaufen.

7. Möbel-Einbaubox nach einem der Ansprüche 1 bis 6, dadurch gekennzeichnet, daß der Kastenrand (7) des Bodens (4) mit dem Rand (11) des Oberteiles (3) stumpf zusammenstößt, die schrägen Böcke (8, 9) mit ihren aneinanderliegenden Keilflächen den Boden (4) gegenüber dem Oberteil (3) in Längsrichtung fixieren und das Oberteil (3) im Bereich der Kabeldurchlaßteile (6a) mit über den Rand (11) vorstehenden Lappen (12) in im Kastenrand (7) des Bodens (4) im Bereich der Kabeldurchlaßteile (6b) ausgenommene Vertiefungen (13) formschlüssig eingreift und den Boden (4) in Querrichtung lagefixiert.

8. Möbel-Einbaubox nach einem der Ansprüche 1 bis 7, dadurch gekennzeichnet, daß die Lappen (12) beiderseits des Kabeldurchlaßteiles (6a) durch an die Innenseite der Rahmenwand (5) angeformte Rippen (14) ausgesteift sind.

9. Möbel-Einbaubox nach einem der Ansprüche 1 bis 8, dadurch gekennzeichnet, daß der Boden (4) am Oberteil (3) durch Schrauben (15) und/oder Clipse lösbar gehalten ist, die durch und in am Boden (4) und Oberteil (3) angeformte Schraubaufnahmen (16) fassen.

10. Möbel-Einbaubox nach einem der Ansprüche 1 bis 9, dadurch gekennzeichnet, daß das Oberteil (3) an seinem den Kabeldurchlaßteilen (6a) gegenüberliegenden Rand einen angeformten, umlaufenden und nach außen gerichteten Befestigungsrand (17) für die Hohldosenfestlegung an einer Wandung (18) aufweist.

11. Möbel-Einbaubox nach einem der Ansprüche 1 bis 10, dadurch gekennzeichnet, daß das Oberteil (3) und der Boden (4) jeweils einteilig aus Kunststoff bestehen.

12. Möbel-Einbaubox nach einem der Ansprüche 1 bis 11, dadurch gekennzeichnet, daß der Boden (4) durch an den Längs- und/oder Querrändern angeformte Stifte und Löcher in Längs- und Querrichtung gegenüber dem Oberteil (3) fixiert ist.

13. Möbel-Einbaubox nach einem der Ansprüche 1 bis 12, dadurch gekennzeichnet, daß das eingesetzte Kabeldurchlaßteil (21) von einem in Achslagerungen (22) des Oberteiles (3) und Bodens (4) drehbar gelagerten, zweigeteilten Klemmbackenkörper mit mindestens einem Kabeldurchgang (23) und mindestens zwei die beiden Klemmbacken (24) zusammenhaltenden und mit den Klemmbacken (24) eine Kabelzugentlastung ergebenden Schrauben (25) gebildet ist (Fig. 10 bis 12).

14. Möbel-Einbaubox nach Anspruch 13, dadurch gekennzeichnet, daß der Klemmbackenkörper zylindrisch und im Querschnitt kreisförmig ausgeführt ist, seine beiden Klemmbacken (24) von Halbzylindern mit stirnendseitigen, halbzylindrischen Lagerstiften, welche zusammen eine zylindrische Lager- und Drehachse (26) ergeben, gebildet sind, die beiden Klemmbacken (24) im Trennbereich eine oder mehrere, zusammen je einen Kabeldurchgang (23) bildende ausgesparte Rinnen aufweisen und durch zwei oder mehrere quer zu den Kabeldurchgängen (23) gerichtete Schrauben (25) zusammengehalten sind.

15. Möbel-Einbaubox nach Anspruch 13 oder 14, dadurch gekennzeichnet, daß die beiden Klemmbacken (24) mit ihren beiden Lager- und Drehachsen (26) in rinnenförmigen Aussparungen (27) der Achslagerungen (22) von Oberteil (3) und Boden (4) quer zur Boxen-Längsrichtung stufenlos axial verdrehbar lagern und im Oberteil (3) und Boden (4) eine einen großen Drehwinkel für die Klemmbacken (24) zum in beliebige Winkelgradeinteilungen aus der Box austretenden Kabelverlauf ermöglichende Aussparung (28) vorgesehen ist.

## Claims

1. Hollow-wall-type box for flush-mounting in furniture, in which there is arranged at least one power outlet and/or a switch and/or a communication insert and on which a cover frame is fitted in detachable manner on the side exposed to view, characterised in that said box is made in two parts from a frame-like top part (3) and a box-like bottom (4) which is adapted to be joined to the top part (3) in a positionally fixed manner, and at least one cable passage component (6a,6b/21) is chased and/or inserted in the top part (3) and in the bottom (4), and said cable passage components (6a,6b/21) produce a non-tensioned cable passage (6) in the region where the top part (3) and the floor (4) are butted together.

2. Box for flush-mounting in furniture according to claim 1, characterised in that each cable passage component (6a, 6b) is constituted by a semicircular chased area and the associated cable passage components (6a, 6b) of the top part (3) and bottom (4) produce a cable channel (6) of circular and/or elliptical cross-section.

3. Box for flush-mounting in furniture according to claim 1 and 2, characterised in that at least one, and preferably two or more cable passage components (6a, 6b) spaced alongside one another, are respectively chased in two opposing faces (walls) (5, 7) of the top part (3) and of the bottom (4).

4. Box for flush-mounting in furniture according to any of claims 1 to 3, characterised in that the top part (3) and the bottom (4) each have a rectangular base and are chased in the shorter rectangular faces of the cable passage component (6a, 6b) or the cable passage components (6a, 6b).

5. Box for flush-mounting in furniture according to any of claims 1 to 4, characterised in that in the top part (3) and floor (4) each cable passage component (6a, 6b) is lengthened by a cuneiform pillow block (8, 9) moulded on the top part (3) and floor (4) and extending to the inside of the top part and floor, so as to form a sloping cable-ducting channel, and the cable-ducting channel incorporates ribbing (10) or similar to hold the cable firmly and to ensure that the cable is not under tension.

6. Box for flush-mounting in furniture according to any of claims 1 to 5, characterised in that the cable passages (6a, 6b) slant outwards from the interior of the top part (3) and to the outside of the floor (4).

7. Box for flush-mounting in furniture according to any of claims 1 to 6, characterised in that the box edge (7) of the floor (4) is butted flush against the edge (11) of the top part (3), the sloping pillow blocks (8, 9) with their contiguous wedge surfaces longitudinally fix the position of the floor (4) in relation to the top part (3), and in the region of the cable passage components (6a) the top part (3) positively engages by tabs (12) which project past the edge (11) in depressions (13) made in the box edge (7) of the floor (4) in the region of the cable passage components (6b), and fixes the transverse position of the floor (4).

8. Box for flush-mounting in furniture according to any of claims 1 to 7, characterised in that the tabs (12) are stiffened on both sides of the cable passage component (6a) by ribs (14) moulded onto the inner face of the frame wall (5).

9. Box for flush-mounting in furniture according to any of claims 1 to 8, characterised in that the floor (4) is held in releasable manner on the top part (3) by screws (15) and/or clips which grip through and into screw locators (16) moulded on the floor (4) and top part (3).

10. Box for flush-mounting in furniture according to any of claims 1 to 9, characterised in that on its edge opposing the cable passage components (6a) the top part (3) features a moulded, peripheral, outwardly-directed fastening edge (17) for fixing the hollow box on a wall (18).

11. Box for flush-mounting in furniture according to any of claims 1 to 10, characterised in that the top part (3) and the floor (4) are each made from one piece of plastic.

12. Box for flush-mounting in furniture according to any of claims 1 to 11, characterised in that the floor (4) is fixed longitudinally and transversely in relation to the top part (3) by pins and holes moulded on the longitudinal and/or transverse edges.

13. Box for flush-mounting in furniture according to any of claims 1 to 12, characterised in that upon insertion the cable passage component (21) is constituted by a two-part clamp unit, mounted for rotation in shaft mountings (22) in the top part (3) and floor (4), with at least one cable passage (23) and at least two screws (25) which hold together the two clamping jaws (24) and combine with the clamping jaws (24) to relieve tension on the cable (Figs. 10 to 12).

14. Box for flush-mounting in furniture according to claim 13, characterised in that the clamp unit is of cylindrical construction with a circular cross-section, its two clamping jaws (24) are formed by half-cylinders with half-cylindrical bearing pins at the front end, which together produce a cylindrical bearing and rotation shaft (26), at their interface the two clamping jaws (24) have one or more chased channels which together form a respective cable passage (23) and are held together by two or more screws (25) aligned at right angles to the cable passages (23).

15. Box for flush-mounting in furniture according to claim 13 or 14, characterised in that the two clamping jaws (24) rest, in a continuously variable, axially rotatable manner at right angles to the longitudinal direction of the box, by their two bearing and rotation shafts (26) in channel-like chased areas (27) in the shaft mountings (22) of the top part (3) and floor (4), and in the top part (3) and floor (4) there is provided a chased area (28) which allows a large rotational angle for the clamping jaws (24) to the cable course emerging from the box in any desired divisions of angular degrees.

## Revendications

1. Boîte à encastrer dans des meubles, sous forme de boîte pour parois creuses, dans laquelle au moins une prise de courant et/ou un commutateur et/ou un insert de communication sont installés et laquelle est pourvue d'un cadre de recouvrement amovible, installé sur le côté visible,
caractérisée en ce que
cette boîte est composée de deux pièces, en l'occurrence d'une pièce supérieure en forme de cadre et d'un fond en forme de caisse, pouvant être relié à la pièce supérieure et fixé dans la position voulue et qu'un passage de câbles au moins est pratiqué, sous forme d'évidement, ou intégré dans la partie supérieure et le fond, ce dont résulte un passage de câbles déchargé de tension dans la zone de jointure de la partie supérieure et du fond.

2. Boîte à encastrer dans des meubles selon la revendication 1,
caractérisée en ce que
chaque passage de câbles (6a, 6b) consiste en un évidement en demi-cercle et que les passages de câbles (6a, 6b) de la partie supérieure (3) et du fond (4) forme un caniveau de câbles (6) de section transversale en demi-cercle ou elliptique.

3. Boîte à encastrer dans des meubles selon les revendication 1 et 2,
caractérisée en ce que
des passages de câbles (6a, 6b), au moins un, de préférence deux ou plusieurs, sont découpés, à intervalle les unes des autres, sur les deux côtés opposés (5, 7) de la partie supérieure (3) et du fond (4).

4. Boîte à encastrer dans des meubles selon les revendications 1 à 3,
caractérisée en ce que
la partie supérieure (3) et le fond (4) présentent chacun une forme de base rectangulaire et que le passage de câbles (6a, 6b) ou les passages de câbles (6a, 6b) sont pratiqués sous forme d'évidements dans les côtés les plus courts.

5. Boîte à encastrer dans des meubles selon les revendications 1 à 4,
caractérisée en ce que
chaque passage de câbles (6a, 6b) est prolongé en un conduit par une pièce (8, 9) formé à partir de la partie supérieure (3) et du fond (4) et s'étendant à l'intérieur de la partie supérieure (3) et du fond (4), le conduit du caniveau de câbles étant pourvu de cannelures (10) ou analogues pour le serrage et la décharge de tension des câbles.

6. Boîte à encastrer dans des meubles selon les revendications 1 à 5,
caractérisée en ce que
les passages de câbles (6a, 6b) s'étendent obliquement de l'intérieur de la pièce supérieure (3) vers l'extérieur et en direction du côté extérieur du fond (4).

7. Boîte à encastrer dans des meubles selon les revendications 1 à 6,
caractérisée en ce que
le fond (4) aboutit bord (7) à bord (11) à la partie supérieure (3), que les surfaces cunéiformes, adjacentes des pièces obliques (8, 9) fixent le fond longitudinalement par rapport à la partie supérieure (3), que la partie supérieure (3) est équipée, dans la zone des passages de câbles (6a), de pattes (12) en saillie au-dessus du bord (11), lesquelles s'engagent géométriquement dans des cavités (13) pratiquées dans le bord (7) du fond (4), dans la zone des passages de câbles (6b), le fond (4) étant ainsi fixé transversalement dans la position voulue.

8. Boîte à encastrer dans des meubles selon les revendications 1 à 7,
caractérisée en ce que
les pattes (12) sont renforcées, des deux côtés du passage de câbles (6a), par des nervures (14) formées à partir de la face intérieure de la paroi du cadre (5).

9. Boîte à encastrer dans des meubles selon les revendications 1 à 8,
caractérisée en ce que
le fond (4) est fixé amoviblement à la partie supérieure (3) à l'aide de vis (15) et/ou de clips qui mordent dans des pièces de réception (16) formées dans le fond (4) et la partie supérieure (3).

10. Boîte à encastrer dans des meubles selon les revendications 1 à 9,
caractérisée en ce que
le bord de la partie supérieure, située à l'opposé des passages de câbles, présente un bord de fixation (17) continu, dirigé vers l'extérieur, lequel est prévu pour la fixation de la boîte dans une paroi creuse (18).

11. Boîte à encastrer dans des meubles selon les revendications 1 à 10,
caractérisée en ce que
la partie supérieure (3) et le fond (4) sont formés chacun d'une seule pièce en matière plastique.

12. Boîte à encastrer dans des meubles selon les revendications 1 à 11,
caractérisée en ce que
le fond (4) est fixé, longitudinalement et horizontalement, à l'aide de pointes formées à partir des bords longitudinaux et/ou transversaux de trous pratiqués dans les bords longitudinaux et/ou transversaux.

13. Boîte à encastrer dans des meubles selon les revendications 1 à 12,
caractérisée en ce que
l'élément de passage de câbles (21) est formé par un corps à mâchoires de serrage formé de deux pièces et monté, pivotant, dans les paliers (22) de la pièce supérieure (3) et du fond (4) avec, au moins, un passage de câbles (23) et, au moins, deux vis (25) maintenant ensemble les deux mâchoires de serrage (24) et formant avec celles-ci une décharge de tension (conf. fig. 10 à 12).

14. Boîte à encastrer dans des meubles selon les revendications 1 à 13,
caractérisée en ce que
le corps à mâchoires de serrage est cylindrique et présente une section transversale en forme de cercle, que ses deux mâchoires de serrage (24) consistent en demi-cylindres avec pointes semicylindriques, équipant la partie frontales et formant ensemble un axe cylindrique de palier et de rotation,
que les deux mâchoires de serrage (24) présentent, dans la zone se séparation, un ou plusieurs conduits qui forment ensemble un passage de câbles (23) et sont maintenus ensemble par deux ou plusieurs vis (25) dirigées transversalement par rapport aux passages de câbles (23).

15. Boîte à encastrer dans dex meubles selon les revendications 13 ou 14,
caractérisée en ce que deux axes de montage et de rotation des deux mâchoires de serrage (24 sont logés dans des évidements (27) en forme de paliers (22) de la pièce supérieure (3) et du fond (4) et pivotent axialement, en continu, transversalement par rapport au sens longitudinal de la boîte
et que, dans la partie supérieure (3) et le fond (4), un évidement (28) est prévu pour les mâchoires de serrage, lequel offre un grand angle d'orientation permettant de diriger à volonté les câbles sortant de la boîte.
